# EUROPÄISCHE PATENTANMELDUNG

(11) **EP 0 564 696 A1**
(43) Veröffentlichungstag der Anmeldung: **13.10.1993**
(21) Anmeldenummer: 92117661.6
(22) Anmeldetag: 16.10.1992
(51) Int. Cl.: F16J 15/34

(54) **Gleitringdichtung**

(30) Priorität: 09.04.1992 DE 4211880
(71) Anmelder: Firma Carl Freudenberg, D-69469 Weinheim (DE)
(72) Erfinder: Hintenlang, Armin, W-6945 Hirschberg (DE); Schäfer, Klaus, W-6800 Mannheim-Rheinau (DE)

(57) **Zusammenfassung**

Gleitringdichtung für eine um eine Achse (1) rotierende Welle (2), umfassend einen Gegenring (3) mit einer axialen Begrenzungsfläche (4) von kreisringförmiger Gestalt, die sich im wesentlichen senkrecht zu der Achse (1) erstreckt sowie einen mit einer kreisringförmig gestalteten Stirnfläche (5) federnd an die Begrenzungsfläche (4) angeordneten Gleitring (6). Die Stirnfläche (5) des Gleitringes (6) ist der Begrenzungsfläche (4) exzentrisch verlagert zugeordnet.

## Beschreibung

Die Erfindung betrifft eine Gleitringdichtung für eine um eine Achse rotierende Welle, umfassend einen Gegenring mit einer axialen Begrenzungsfläche von kreisringförmiger Gestalt, die sich im wesentlichen senkrecht zu der Achse erstreckt sowie einen mit einer kreisringförmig gestalteten Stirnfläche federnd an die Begrenzungsfläche angeordneten Gleitring.

Derartige Gleitringdichtungen sind allgemein bekannt und gelangen beispielsweise zur Abdichtung von Kühlmittelpumpen zur Anwendung. Der Gegenring mit der axialen Begrenzungsfläche läuft mit dem rotierenden Bauteil gemeinsam um, während der Gleitring relativ unbeweglich mit der zur Anwendung gelangenden Dichtung aus elastomerem Werkstoff in einem Gehäuse angeordnet ist. Dabei ist allerdings zu beachten, daß sich während der Gebrauchsdauer im Bereich der einander berührenden Begrenzungsflächen des Gleitringes und des Gegenringes kristalline Produkte ablagern, die zu einer Beschädigung und/oder Zerstörung der einander berührenden Gleitflächen führen. Die kristallinen Produkte, beispielsweise Siliziumoxyd, befinden sich zunächst in dem abzudichtenden Medium, während im Gleitspalt zwischen Gegenring und Gleitring infolge Mediums- und Reibungstemperatur und dem Druckgefälle von Mediums- zu Atmosphärenseite Teile des abzudichtenden Mediums verdampfen und kristalline Rückstände zurückbleiben.

Der Erfindung liegt die Aufgabe zugrunde, eine Gleitringdichtung der vorbekannten Arte derart weiterzuentwickeln, daß auf der Innenseite des Gegenringes abgelagerte, kristalline Verunreinigungen aus dem Bereich der einander reibend berührenden Begrenzungsflächen des Gleitringes und des Gegenringes entfernt werden sowie ein Eindringen der Verunreinigungspartikel in den Bereich der Gleitflächen zuverlässig verhindert wird.

Außerdem besteht die Möglichkeit, die einander berührenden Begrenzungsflächen zu kühlen, so daß auch primär eine Verunreinigung durch temperatur- druckabhänige Auskristallisation von Mediumsbestandteilen entgegengewirkt wird.

Diese Aufgabe wird erfindungsgemäß mit den kennzeichnenden Merkmalen von Anspruch 1 gelöst. Auf vorteilhafte Ausgestaltungen nehmen die Unteransprüche Bezug.

Bei der erfindungemäßen Gleitringdichtung ist die Stirnfläche der Begrenzungsfläche exzentrisch verlagert zugeordnet. Hierbei ist von Vorteil, daß die kristallinen Ablagerungen während der bestimmungsgemäßen Verwendung der Gleitringdichtung sofort nach der Entstehung aus dem Bereich der einander berührenden Gleitflächen von Gleitring und Gegenring abgeführt werden, was zu einer deutlichen Verlängerung der Gebrauchsdauer der Gleitringdichtung bei verbesserten Gebrauchseigenschaften führt. Durch die exzentrische Verlagerung der Begrenzungsfläche des Gegenringes zu der Stirnfläche des Gleitringes tritt bei relativer Rotation der beiden Ringe zueinander ein Reinigungseffekt der einander berührenden Gleitflächen auf.

Weiter verbesserte Gebrauchseigenschaften bei weiterer Verlängerung der Gebrauchsdauer können dadurch erzielt werden, daß sich die Stirnfläche und die Begrenzungsfläche an einer Umfangsstelle radial innenseitig überlappen. Die aus dem Bereich der Gleitflächen abgeführten Verunreinigungen verbleiben durch diese Ausgestaltung größtenteils nicht mehr auf den Gleitflächen. Sie werden durch die Rotation der einander drehbeweglich zugeordneten Ringe verlagert und aus dem Bereich der momentan aneinander anliegenden Gleitflächen abgeführt.

Die festen Partikeln lagern sich beispielsweise an Auffangflächen an, die dem ruhend im Gehäuse angeordneten Gleitring zugeordnet sind. Durch die Überlappung von Stirnfläche und Begrenzungsfläche an zumindest einer Umfangsstelle tritt ein Abstreifeffekt ein, der die unerwünschten Verunreinigungen aus dem Bereich der axial einander benachbarten Begrenzungsfläche und Stirnfläche weitgehend entfernt.

Besonders vorteilhafte Gebrauchseigenschaften weist die Gleitringdichtung auf, wenn der durch die Überlappung gebildete Überstand der Stirnfläche über die Begrenzungsflächen 0,05 bis 0,5 mal so groß ist wie die größte gegenseitige Überdeckung der Begrenzungsfläche durch die Stirnfläche in radialer Richtung. Diese Ausgestaltung bedingt einerseits eine gute Abdichtung des abzudichtenden Mediums und andererseits eine ausreichend große Berührungsfläche von Gleitring und Gegenring, so daß diese ausreichend aufeinander abgestützt sind. Verkantungen und/oder erhöhter Verschleiß können durch diese Ausgestaltung zuverlässig ausgeschlossen werden. Die sich ablagernden, kristallinen Verunreinigungen können durch die erfindungsgemäße Gleitringdichtung von den einander berührenden Gleitflächen ferngehalten werden und lagern sich zumeist in Form eines Belages an den Teilbereichen der Oberfläche des Gleitringes an, die mit anderen Bauteilen nicht berührend in Verbindung steht. Desweiteren wird mit dieser Ausführung eine Kühlung der Gleitflächen erreicht, wodurch die temperateur- druckabhängige Auskristallisation verhinderr bzw. reduziert wird.

Der Gegenstand der vorliegenden Erfindung wird nachfolgend anhand der als Anlage beigefügten Zeichnungen weiter erläutert. Diese zeigen die zu berücksichtigenden Einzelkomponenten teilweise in schematischer Darstellung.
Figur 1 zeigt einen Schnitt durch die erfindungsgemäße Gleitringdichtung,
Figur 2 zeigt die gegenseitige Zuordnung von Gegenring und Gleitring zueinander, wie in Figur 1 dargestellt.

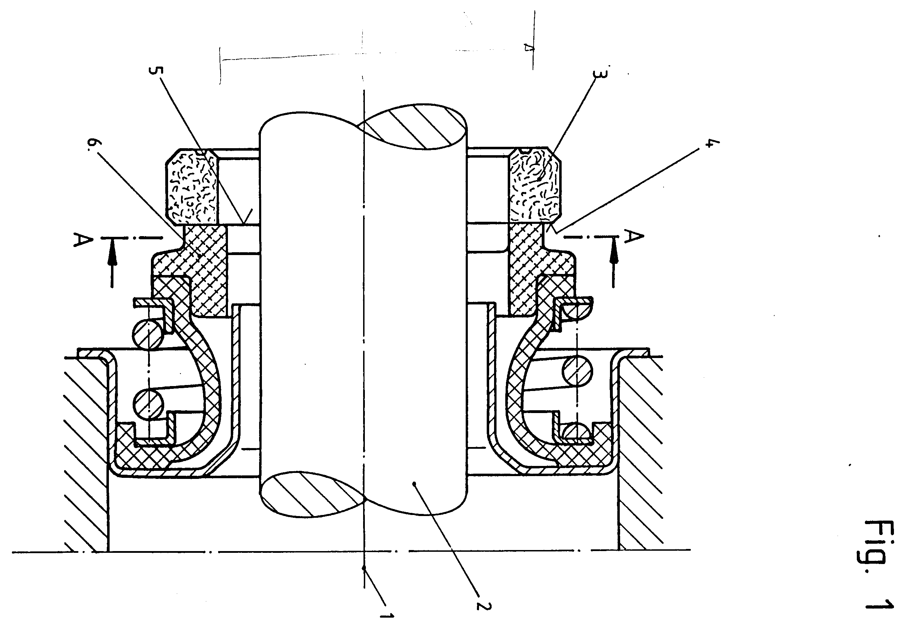

In Figur 1 ist ein Ausführungsbeispiel einer Gleitringdichtung für eine Welle 2 gezeigt, die um eine Achse 1 rotiert. Die Gleitringdichtung umfaßt einen Gegenring 3 mit einer axialen Begrenzungsfläche 4, die sich im wesentlichen senkrecht zu der Achse 1 erstreckt sowie einen mit einer kreisringförmig gestalteten Stirnfläche 5 federnd an die Begrenzungsfläche 4 angeordneten Gleitring 6. An die Begrenzungsfläche 4 des Gegenringes 3 ist der Gleitring 6 federkraftbeaufschlagt angedrückt, wobei der Gleitring 5 und der Gegenring 3 im Bereich ihrer Kontaktflächen während der bestimmungsgemäßen Verwendung relativ zueinander drehbeweglich sind. Die Stirnfläche 5 des Gleitringes 6 ist der Begrenzungsfläche 4 des Gegenringes 3 exzentrisch verlagert zugeordnet.

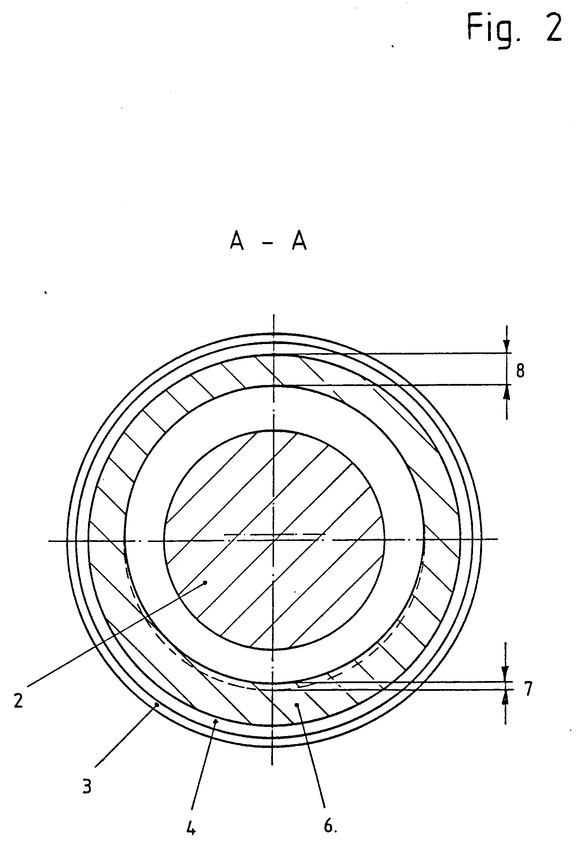

In diesem Ausführungsbeispiel ist es vorgesehen, daß sich die Stirnfläche 5 und die Begrenzungsfläche 4 an einer Umfangsstelle bzw. in einem Umfangsbereich radial innenseitig überlappen, wie in Figur 2 zu erkennen. Der durch die Überlappung gebildete Überstand 7 der Stirnfläche 5 über die Begrenzungsfläche 4 ist so groß gewählt, daß eine zuverlässige Ableitung der unerwünschten Rückstände von den einander benachbarten Flächen gewährleistet ist. Der Überstand 7 ist auf die je

weiligen Gegebenheiten des Anwendungsfalles abzustimmen und ist bevorzugt 0,05 bis 0,5 mal so groß wie die größte gegenseitige Überdeckung 8 der beiden Flächen in radialer Richtung.

## Patentansprüche

1. Gleitringdichtung für eine um eine Achse rotierende Welle, umfassend einen Gegenring mit einer axialen Begrenzungsfläche von kreisringförmiger Gestalt, die sich im wesentlichen senkrecht zu der Achse erstreckt sowie einen mit einer kreisringförmig gestalteten Stirnfläche federnd an die Begrenzungsfläche angeordneten Gleitring, dadurch gekennzeichnet, daß die Stirnfläche (5) der Begrenzungsfläche (4) exzentrisch verlagert zugeordnet ist.

2. Gleitringdichtung nach Anspruch 1, dadurch gekennzeichnet, daß die Stirnfläche (5) die Begrenzungsfläche (4) an einer Umfangsstelle radial innenseitig überlappt.

3. Gleitringdichtung nach Anspruch 1 bis 2, dadurch gekennzeichnet, daß der durch die Überlappung gebildete Überstand (7) der Stirnfläche (5) über die Begrenzungsfläche (4) 0,05 bis 0,5 mal so groß ist, wie die größte gegenseitige Überdeckung (8) der Begrenzungsfläche (4) durch die Stirnfläche (5) in radialer Richtung.
